**Europäisches Patentamt**

**European Patent Office**

**Office européen des brevets**

(19)

(11) Veröffentlichungsnummer: **0 143 873**
**B1**

(12)

# EUROPÄISCHE PATENTSCHRIFT

(45) Veröffentlichungstag der Patentschrift:
**18.05.88**

(51) Int. Cl.⁴: **C 22 C 38/04**

(21) Anmeldenummer: **84104916.6**

(22) Anmeldetag: **02.05.84**

(54) **Austenitischer Manganhartstahl und Verfahren zu seiner Herstellung.**

(30) Priorität: **23.09.83 AT 3392/83**

(43) Veröffentlichungstag der Anmeldung:
**12.06.85 Patentblatt 85/24**

(45) Bekanntmachung des Hinweises auf die Patenterteilung:
**18.05.88 Patentblatt 88/20**

(84) Benannte Vertragsstaaten:
**AT BE CH DE FR GB IT LI NL SE**

(56) Entgegenhaltungen:
**EP-A-0 091 897**
**FR-A-2 402 714**
**GB-A-1 187 023**
**SU-A-322 399**
**SU-A-581 165**
**SU-A-610 879**

**E. HOUDREMONT: "Handbuch der Sonderstahlkunde", Band 1, 1956, Seiten 510-515, Springer Verlag, Berlin, DE**

(73) Patentinhaber: **Kos, Bernd, Dipl.- Ing., Endresgasse 11, A-8700 Leoben (AT)**

(72) Erfinder: **Kos, Bernd, Dipl.- Ing., Endresgasse 11, A-8700 Leoben (AT)**

(74) Vertreter: **Beer, Manfred, Dipl.- Ing., Patentanwälte Dipl.- Ing. Otto Beer, Dipl.- Ing. Manfred Beer Lindengasse 8, Postfach 462, A-1071 Wien (AT)**

**Beschreibung**

Die Erfindung betrifft einen austenitischen Manganhartstahl mit folgenden Legierungsgehalten in Gew.-%

| | | |
|---|---|---|
| 0,8 | bis | 1,8 C |
| 6,0 | bis | 18,0 Mn |
| 0 | bis | 3,0 Cr |
| 0 | bis | 2,0 Ni |
| 0 | bis | 2,5 Mo |
| 0 | bis | 1,0 Si, |

wobei das Verhältnis des Kohlenstoffgehaltes zum Mangangehalt 1 : 8 bis 1 : 14 beträgt und der Rest aus Eisen, Verunreinigungen und 0,02 bis 0,09 Gew.-% Aluminium als Desoxidationszusatz sowie Vanadium und Titan als Mikrolegierungszusätze besteht.

Ein solcher Manganhartstahl zeichnet sich durch eine sehr große Härte und vor allem durch seine Verfestigungsfähigkeit bei der Kaltverformung aus. Er kann bei seiner Verwendung infolge schlagender, stoßender oder Druckbeanspruchung nachhärten. Die Beanspruchung hat eine martensitische Gefügeumwandlung in einer Oberflächenschicht zur Folge, wobei die Härte in dieser Schicht von 200 HB auf über 500 HB ansteigt. Die harte Oberflächenschicht wird zwar durch die Beanspruchung abgetragen, gleichzeitig aber durch dieselbe Beanspruchung ständig neu gebildet. Dabei hat der unterhalb der Oberflächenschicht befindliche Werkstoff eine sehr gute Zähigkeit und Verformungsfähigkeit. Austenitische Manganhartstähle können daher großen Schlagbeanspruchungen standhalten. Das Verwendungsgebiet sind demnach Werkzeuge für den Bergbau, die Aufbereitung, beschußsichere Panzerplatten oder Stahlhelme usw.

Notwendig für die günstigen mechanischen Eigenschaften, insbesondere für die Verformungsfähigkeit des unter der harten Oberflächenschicht befindlichen Werkstoffes, ist jedoch eine hohe Feinkörnigkeit. Besonders im Inneren größerer Gußstücke ist diese Feinkörnigkeit nur schwer zu erreichen. Solche Gußstücke haben im Querschnitt sehr verschiedene Korngrößen. An eine feinkörnige Randzone schließt eine sehr grobkörnige, stengelkristalline Schicht an, auf die eine grobe, globularkristalline Innenzone folgt. Selbst durch Schmieden des Gußstückes können die Kornunterschiede nicht völlig ausgeglichen werden. Bei Formgußstücken ist der Ausgleich besonders schwierig. Die Dehnung und Kerbschlagzähigkeit ist auch bei genauer Einhaltung der Legierungszusammensetzung nicht in allen Fällen ausreichend.

Es ist bekannt, ein Blockguß- oder Formgußstück zur Kornfeinung einer Wärmebehandlung zu unterwerfen, die aus einem ersten vielstündigen Glühen bei 500 bis 600°C zur Umwandlung von Austenit in Perlit, sowie aus einem zweiten Glühvorgang zur Rückwandlung in Austenit bei 970 bis 1110°C besteht. Die Wirkung ist trotz der Aufwendigkeit des Verfahrens unsicher.

Es ist ferner bekannt, die Schmelze bei einer sehr niedrigen, nahe am Schmelzpunkt befindlichen Gießtemperatur abzugießen. Durch die niedrige Gießtemperatur werden eine hohe Keimzahl und ein feineres Korn erreicht. Diese Arbeitsweise verursacht große Schwierigkeiten in der Gießpraxis und es sind nur einfache Formen möglich, weil die rasch erstarrende Schmelze entlegene Stellen oder Kanten der Gießform nicht völlig ausfüllt.

Es ist weiters bekannt, Stahl zur Kornfeinung karbid- oder nitridbildende Elemente wie Ti, Zr, Nb, V, B und/oder N zuzusetzen, wobei als Mengen jeweils mindestens zwischen 0,1 und 0,2 Gew.-% gewählt wurden. Diese Mikrolegierungszusätze haben zwar eine Kornfeinung bewirkt, führten aber zu einem Abfall der Bruchdehnung und der Kerbschlagzähigkeit.

Aus dem Dokument SU-A-610 879 ist ein Stahl gemäß dem Oberbegriff des unabhängigen Anspruches 1 bekannt. Für den aus SU-A-610 879 bekannten Stahl sind die Gehalte an Barium und Aluminium wesentlich. Der Gehalt an Barium und Aluminium soll die Festigkeits- und Bildsamkeitseigenschaften des Stahls verbessern, und den Stahl gegen Frost unempfindlich machen.

Gemäß EP-A-91 897, eines älteren europäischen Anmeldung nach Art 54 (3) EPÜ sollen schließlich Ti, Zr und V als Mikrolegierungselemente, jeweils in einer Menge bis zu 0,05 Gew.-% zugesetzt werden, wobei die Summe der Gehalte an diesen Mikrolegierungselementen zwischen 0,002 und 0,05 Gew.-% betragen soll.

Die Erfindung geht aus von einem austenitischen Manganhartstahl wie er z. B. in der DIN mit der Werkstoff-Nr. 1.3401 beschrieben ist. Gemäß dieser Norm betragen die Legierungsgehalte in Gew.-%: C etwa 1,25, Mn 11 bis 14, Cr bis 2,5, Ni bis 2 zur Stabilisierung des Austenits, Mo bis 2,5 zum verhindern grober Karbidausscheidungen. Das Verhältnis des Kohlenstoffgehaltes zum Mangangehalt muß dabei zwischen 1 : 8 und 1 : 14 liegen, d. h., das Mangan muß abgestimmt auf den Kohlenstoffgehalt - einerseits für ein austenitisches Gefüge ausreichen und darf anderseits den Austenit nicht so stark stabilisieren, daß die Verfestigungsfähigkeit durch Kaltverformung leidet.

Der Erfindung liegt die Aufgabe zugrunde, einen durch Kaltverformung verfestigungsfähigen austenitischen Manganhartstahl bereitzustellen, der ohne die Nachteile der bekannten Maßnahmen über den gesamten Querschnitt möglichst gleichmäßig feinkörnig und verformungsfähig ist. Die Bruchdehnung soll mindestens 20 % betragen und die übrigen mechanischen Eigenschaften sollen sich nicht verschlechtern.

Diese Aufgabe wird bei einem Stahl der eingangs genannten Art dadurch gelöst, daß die Summe des Vanadium- und des Titangehaltes zwischen 0,05 und 0,08 Gew.-% beträgt und daß die Gehalte an Vanadium und Titan je mindestens 0,01 Gew.-% betragen und daß die durchschnittliche Korngröße höchstens 0,5 mm

2

0 143 873

beträgt.

Durch die Einhaltung dieser Bedingung kann die angestrebte Verbesserung der mechanischen Eigenschaften des austenitischen Manganhartstahles auch großtechnisch mit Sicherheit reproduzierbar erreicht werden. Die gewünschte Feinkörnigkeit wird über den gesamten Querschnitt des Gußstückes ohne Verschlechterung der übrigen mechanischen Eigenschaftener reicht.

Überraschenderweise hat sich herausgestellt, daß es vorteilhaft ist, wenn die Gehalte an Vanadium und Titan je mindestens 0,02 Gew.-% betragen, da das gewünschte Ergebnis bei diesen Gehalten an Vanadium und Titan noch sicherer erreicht wird.

Der Aluminiumgehalt von 0,02 bis 0,09 Gew.-% ist als nach der Desoxidation verbleibender Restaluminiumgehalt der Schmelze vorteilhaft, um die vor der Titanzugabe nötige vollständige Desoxidation zu gewährleisten.

Zur Herstellung des erfindungsgemäßen austenitischen Manganhartstahles werden die Mikrolegierungszusätze nach dem Erschmelzen des Einsatzes im Elektroofen bzw. in der Gießpfanne zugegeben und das Gußstück nach dem Entformen einer Wärmebehandlung mit anschließender rascher Abkühlung unterworfen, wird erfindungsgemäß zuerst das Vanadium in die im Elektroofen befindliche Schmelze am Ende der Feinungsperiode und anschließend das Titan der in der Gießpfanne befindlichen Schmelze nach deren Desoxidation mit Aluminium zugeführt und zur Wärmebehandlung bei einer Temperatur von 1050 bis 1150° C geglüht.

Vor der Desoxidation und der Einstellung der gewünschten Abstichtemperatur im Bereich zwischen 1450 und 1620° C wird die Schmelze mit einer kalkhältigen Schlacke abgedeckt, um in der Gießpfanne eine Gießtemperatur zwischen 1420 und 1520° C halten zu können. Die erwähnte Wärmebehandlung der Blockguß- oder Formgußstücke ist für den Ausgleich der mechanischen Eigenschaften über den gesamten Querschnitt des Gußstückes zweckmäßig. Für die rasche Abkühlung der Gußstücke nach der Wärmebehandlung kommt ein Wasserbad und/oder die Kühlung durch strömende Luft, gegebenenfalls nach einem ersten langsameren Abkühlungsschritt in Frage.

Die Erfindung wird an Hand von Ausführungsbeispielen und Vergleichsbeispielen näher erläutert:

## Beispiel 1:

In einem Lichtbogenofen wurden 3000 kg Manganhartstahl mit folgender Zusammensetzung erschmolzen:

1,30 Gew.-% Kohlenstoff, 13,60 Gew.-% Mangan, 0,10 Gew.-% Chrom, 0,22 Gew.-% Silizium. Am Ende der Feinungsperiode wurden 1,5 kg Vanadium (0,04 Gew.-%) in Form von Ferrovanadium zugesetzt. Daraufhin wurde die Schmelze mit einer kalkhaltigen Schlacke abgedeckt, eine Abstichtemperatur von 1510° C gemessen und zur Desoxidation 2 kg Aluminium zugegeben. Beim Abstich wurden sechs Gießpfannen mit je etwa 200 kg Schmelze gefüllt. In die sechs Gießpfannen wurde Titan (in Form von Ferrotitan) in verschiedenen Mengen zugegeben und in jeder Pfanne die Gießtemperatur gemessen:

Pfanne A:   Titanzusatz: 0 kg
            Gießtemperatur: 1440° C

Pfanne B:   Titanzusatz: 0,04 kg
            Gießtemperatur: 1445° C

Pfanne C:   Titanzusatz: 0,06 kg
            Gießtemperatur: 1445° C

Pfanne D:   Titanzusatz: 0,08 kg
            Gießtemperatur: 1440° C

Pfanne E:   Titanzusatz: 0,11 kg
            Gießtemperatur: 1395° C

Pfanne F:   Titanzusatz: 0,13 kg
            Gießtemperatur: 1400° C

Aus dem Metall jeder der sechs Gießpfannen wurden jeweils drei Rundstäbe mit einem Durchmesser von 15 cm und einer Länge von 1 m gegossen. Die achtzehn Stäbe wurden entformt, abkühlen gelassen und sodann in einem Glühofen vier Stunden lang auf einer Temperatur von 1070° C gehalten. Nach der Entnahme aus dem Glühofen wurden die Stäbe sofort im Wasserbad abgekühlt. Aus jedem der Stäbe wurden im Abstand von 20, 50 und 70 cm vom (beim Gießen unteren) Ende jeweils eine Probe vom Rand und von der Mitte der Stäbe entnommen und Schliffbilder aus dem Probenbereich der Stäbe angefertigt. Alle vierundfünfzig Proben (davon haben immer je drei Proben die gleiche Zusammensetzung und sind an der gleichen Stelle entnommen) wurden einer Prüfung auf ihre Festigkeit und Kaltverformbarkeit durch Feststellung der Zugfestigkeit und der Bruchdehnung unterzogen. Außerdem wurde der (bei allen Proben fast gleiche) Vanadiumgehalt mit 0,038 bis 0,041 Gew.-% festgestellt. Weiters wurden an Hand der aus den Gießpfannen stammenden Proben jeweils zwei Proben auf ihren Titangehalt analysiert. Die in der nachstehenden Tabelle angeführten Titangehalte sind aus zwei Analysen gebildete Mittelwerte. Im übrigen sind in der Tabelle von den jeweils drei Parallelproben die Mittelwerte der jeweils festgestellten mechanischen Kennwerte angegeben.

3

| Titangehalt Gew.-% (Pfannen- bezeichnung) | Probenentnahmestelle in der Höhe von 20 cm (unten), 50 cm (Mitte) 70 cm (oben) vom unteren Ende | Zugfestigkeit (N/mm²) | | Bruchdehnung (%) | |
|---|---|---|---|---|---|
| | | Mitte | Rand | Mitte | Rand |
| 0 | unten | 720 | 750 | 27 | 41 |
| | Mitte | 760 | 760 | 25 | 37 |
| (A) | oben | 760 | 790 | 20 | 23 |
| 0,014 | unten | 720 | 720 | 40 | 49 |
| (B) | Mitte | 710 | 730 | 29 | 42 |
| | oben | 740 | 680 | 35 | 41 |
| 0,022 | unten | 660 | 680 | 49 | 53 |
| (C) | Mitte | 630 | 680 | 42 | 44 |
| | oben | 630 | 670 | 43 | 42 |
| 0,036 | unten | 730 | 740 | 61 | 62 |
| (D) | Mitte | 820 | 780 | 51 | 59 |
| | oben | 90 | 70 | 42 | 53 |
| 0,045 | unten | 720 | 760 | 33 | 48 |
| (E) | Mitte | 700 | 720 | 27 | 42 |
| | oben | 690 | 710 | 17 | 29 |
| 0,053 | unten | 700 | 720 | 20 | 31 |
| (F) | Mitte | 690 | 710 | 18 | 28 |
| | oben | 770 | 710 | 21 | 30 |

Man sieht, daß die Bruchdehnung bei Abwesenheit von Titan (Gießpfanne A) und bei Titangehalten von 0,045 und 0,053 Gew.-% (Gießpfanne E bzw. F) die eine unterhalb bzw. oberhalb des erfindungsgemäßen Bereiches liegende Summe des Vanadium- und des Titangehaltes ergeben, nicht in allen Fällen oberhalb des angestrebten Mindestwertes von 20 % liegt. Die Proben mit den ungünstigen Werten der Bruchdehnung (Pfannen A und E "oben" und Pfanne F "Mitte" und "oben") liegen zwar im in der Tabelle angegebenen Durchschnitt zum Teil noch oberhalb des angestrebten Minimums, die tatsachlich erreichten Bruchdehnungen sind aber bei diesen Proben in den ungünstigeren Fällen kleiner als 20 % und generell niedriger als bei den Proben der Pfannen B, C, D. Auch die Schliffbilder spiegeln dieses Ergebnis wider. Bei den Proben mit den niedrigsten Bruchdehnungswerten wurden durchschnittliche Korngrößendurchmesser von 0,5 mm bis über 8,0 mm festgestellt. Bei den Proben mit Bruchdehnungswerten im angestrebten Bereich von über 20 % wurden in keinem Fall durchschnittliche Korngrößendurchmesser von über 0,5 mm festgestellt.

**Beispiel 2:**

In einem Lichtbogenofen wurden 3200 kg Manganhartstahl mit folgender Zusammensetzung erschmolzen: 1,14 Gew.-% Kohlenstoff, 13,50 Gew.-% Mangan, 0,46 Gew.-% Chrom, 0,48 Gew.-% Silizium.

Am Ende der Feinungsperiode wurden 1,6 kg Vanadium (0,05 Gew.-% in Form von Ferrovanadium) zugesetzt. Nachdem die Schmelze mit einer Schlacke aus Kalkstein mit einem Zusatz von Kalziumfluorid abgedeckt wurde, wurde eine Abstichtemperatur von 1580°C gemessen und zur Desoxidation Aluminium zugesetzt. Nach dem darauf folgenden Abstich in der Gießpfanne wurde dort durch Zugabe von Ferrotitan ein Titangehalt von 0,015 Gew.-% eingestellt. Bei einer Gießtemperatur von 1490°C wurden für einen Erzbrecher bestimmte Brechbacken mit einer maximalen Wanddicke von 180 mm gegossen. Die abgekühlten Gußstücke wurden entformt und bei einer Temperatur von 1120°C drei Stunden lang geglüht. Nach dem Glühen wurden die Gußstücke sofort in Wasser abgekühlt.

Aus fünf in gleicher Weise hergestellten fertigen Gußstücken wurden Proben aus dem Inneren und der Randzone entnommen. Es wurden Schliffbilder angefertigt, die Zugfestigkeit und die Bruchdehnung des Probenmaterials festgestellt. Die Zugfestigkeit aller Proben betrug zwischen 760 und 790 N/mm² Für die Bruchdehnung wurden Werte im Bereich zwischen 47 und 55 % gemessen, wobei die Streuung der Werte unabhängig von der Stelle der Probeentnahme war, d. h., die aus dem Inneren der Gußstücke stammenden Proben waren im Durchschnitt nicht weniger kaltverformbar als die aus der Randzone stammenden Proben. Auch die Schliffbilder bestätigten diese Tatsache. Es konnte kaum ein Unterschied der Korngröße zwischen den aus dem Inneren und den aus der Randzone stammenden Proben festgestellt werden; die Proben waren durchwegs feinkörnig.

Die Analyse ergab folgende Gehalte an Vanadium, Titan und Aluminium: 0,045 Gew.-% V, 0,015 Gew.-% Ti, 0,03 Gew.-% Al.

**Patentansprüche**

1. Austenitischer Manganhartstahl mit folgenden Legierungsgehalten in Gew.-%

| 0,8 | bis | 1,8 C |
|-----|-----|-------|
| 6,0 | bis | 18,0 Mn |
| 0 | bis | 3,0 Cr |
| 0 | bis | 2,0 Ni |
| 0 | bis | 2,5 Mo |
| 0 | bis | 1,0 Si, |

wobei das Verhältnis des Kohlenstoffgehaltes zum Mangangehalt 1 : 8 bis 1 : 14 beträgt und der Rest aus Eisen, Verunreinigungen und 0,02 bis 0,09 Gew.-% Aluminium als Desoxidationszusatz sowie Vanadium und Titan als Mikrolegierungszusätze besteht, wobei die Summe des Vanadium- und des Titangehaltes zwischen 0,05 und 0,08 Gew.-% beträgt, die Gehalte an Vanadium und Titan je mindestens 0,01 Gew.-% betragen und die durchschnittliche Korngröße höchstens 0,5 mm beträgt.

2. Austenitischer Manganhartstahl nach Anspruch 1, dadurch gekennzeichnet, daß die Gehalte an Vanadium und Titan je mindestens 0,02 Gew.-% betragen.

3. Verfahren zur Herstellung des austenitischen Manganhartstahls nach Anspruch 1 oder 2, wobei die Mikrolegierungszusätze nach dem Erschmelzen des Einsatzes im Elektroofen bzw. in der Gießpfanne zugegeben werden und das Gußstück nach dem Entformen einer Wärmebehandlung mit anschließender rascher Abkühlung unterworfen wird, dadurch gekennzeichnet, daß zuerst das Vanadium in die im Elektroofen befindliche Schmelze am Ende der Feinungsperiode und anschließend das Titan der in der Gießpfanne befindlichen Schmelze nach deren Desoxidation mit Aluminium zugeführt wird und daß zur Wärmebehandlung bei einer Temperatur von 1050 bis 1150°C geglüht wird.

**Claims**

1. Austenitic manganese hard steel with the following alloy contents in wight %:

| 0,8 | to | 1,8 C |
|-----|-----|-------|
| 6,0 | to | 18,0 Mn |
| 0 | to | 3,0 Cr |
| 0 | to | 2,0 Ni |
| 0 | to | 2,5 Mo |
| 0 | to | 1,0 Si, |

wherein the ratio of the carbon content to the manganese content amounts to 1 : 8 to 1 : 14 and the remainder consists of iron, impurities and 0,02 to 0,09 weight % aluminium as de-oxidant additive as well as vanadium and titanium as micro-alloying additives, wherein the sum of the vanadium and the titanium contents amounts to between 0,05 and 0,08 weight % and the content of vanadium and titanium each amount to at least 0,01 weight % and the average grain size amounts to 0,5 mm at the most.

2. Austenitic manganese hard steel according to claim 1, characterised in that the content of vanadium and titanium each amount to at least 0,02 weight %.

3. Method of manufacture of the austenitic manganese hard steel according to claim 1 or 2, wherein the micro-alloying additives are introduced afther the smelting in the electric furnace or casting ladle respectively and the casting is subjected after opening the mould to a heat treatment with concluding abrupt cooling, characterised in that the vanadium is firstly added to the melt in the electric furnace at the end of the refining period and then the titanium is added to the melt in the casting ladle after its de-oxidation with aluminium, and in that for the heat treatment it is annealed at a temperature of 1050 to 1150°C.

**Revendications**

1. Acier trempant austénitique au manganèse présentant les teneurs suivantes, en pourcentages pondéraux, d'éléments alliés:

**0 143 873**

| C : | 0,8 | à | 1,8 |
|---|---|---|---|
| Mn : | 6,0 | à | 18,0 |
| Cr : | 0 | à | 3,0 |
| Ni : | 0 | à | 2,0 |
| Mo : | 0 | à | 2,5 |
| Si : | 0 | à | 1,0 |

le rapport de la teneur en carbone à la teneur en manganèse étant compris entre 1 : 8 et 1 : 14, et le complément étant constitué de fer, d'impuretés, et de 0,02 à 0,09 % en poids d'aluminium en tant qu'élément de désoxydation, ainsi que de vanadium et de titane en tant qu'éléments de micro-alliage, la somme des teneurs en vanadium et en titane étant comprise entre 0,05 et 0,08 % en poids, chacune des teneurs en vanadium et en titane s'élevant au moins à 0,01 % en poids, et la taille moyenne des grains étant de 0,5 mm au maximum.

2. Acier trempant austénitique au manganèse conforme à la revendication 1, caractérisé en ce que chacune des teneurs en vanadium et en titane s'élève au moins à 0,02 % en poids.

3. Procédé pour la fabrication d'un acier trempant austénitique au manganèse, conforme à la revendication 1 ou 2, dans lequel les éléments de micro-alliage sont ajoutés dans le four électrique ou dans la poche de coulée, après fusion de la charge, et la pièce coulée est soumise après démoulage à un traitement thermique avec refroidissement ultérieur rapide, caractérisé en ce que l'on ajoute d'abord le vanadium à la fin de la période d'affinage à la masse fondue se trouvant dans le four électrique, et ensuite le titane à la masse fondue se trouvant dans la poche de coulée, après désoxydation de cette masse fondue avec l'aluminium, et en ce que pour le traitement thermique, on effectue un recuit à une température de 1050 à 1150°C.